(19) **Europäisches Patentamt**

**European Patent Office**

**Office européen des brevets**

(11) **EP 1 349 079 A1**

(12) **EUROPEAN PATENT APPLICATION**

(43) Date of publication:
01.10.2003 Bulletin 2003/40

(51) Int Cl.7: **G06F 17/28**

(21) Application number: **02252326.0**

(22) Date of filing: **28.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **BRITISH TELECOMMUNICATIONS public limited company**<br>**London EC1A 7AJ (GB)** | (72) Inventor: **Appleby, Stephen Clifford**<br>**Colchester, Essex C07 9JQ (GB)**<br><br>(74) Representative: **Musker, David Charles et al**<br>**R.G.C. Jenkins & Co.**<br>**26 Caxton Street**<br>**London SW1H 0RJ (GB)** |

(54) **Machine translation**

(57)     A computer natural language translation system, comprising: means for inputting source language text; means for outputting target language text; transfer means for generating said target language text from said source language text using stored translation data generated from examples of source and corresponding target language texts, in which said stored translation data comprises a plurality of translation units each consisting of an aligned language unit (e.g. word). This invention generates the translation units for the translation system from a new source-target translation pair of examples, by generating an analysis of one of the texts, then finding, using a wildcard substitution process, a language unit which can be modified to generate a new language unit making the system able to translate the texts.

FIG. 24

**Description**

This invention relates to machine translation. More particularly, this invention relates to example-based machine translation. Machine translation is a branch of language processing.

In most machine translation systems, a linguist assists in the writing of a series of rules which relate to the grammar of the source language (the language to be translated from) and the target language (the language to be translated to) and transfer rules for transferring data corresponding to the source text into data corresponding to the target text. In the classical "transfer" architecture, the source grammar rules are first applied to remove the syntactic dependence of the source language and arrive at something closer to the semantics (the meaning) of the text, which is then transferred to the target language, at which point the grammar rules of the target language are applied to generate syntactically correct target language text.

However, hand-crafting rules for such systems is expensive, time consuming and error prone. One approach to reducing these problems is to take examples of source language texts and their translations into target languages, and to attempt to extract suitable rules from them. In one approach, the source and target language example texts are manually marked up to indicate correspondences.

Prior work in this field is described in, for example, Brown P F, Cocke J, della Pietra S A, della Pietra V J, Jelinek F, Lafferty J D, Mercer R L and Roossin P S 1990, 'A Statistical Approach to Machine Translation', *Computational Linguistics*, **16** 2 pp. 79-85; Berger A, Brown P, della Pietra S A, della Pietra V J, Gillett J, Lafferty J, Mercer R, Printz H and Ures L 1994, 'Candide System for Machine Translation', in *Human Language Technology: Proceedings of the ARPA Workshop on Speech and Natural Language*; Sato S and Nagao M 1990, 'Towards Memory-based Translation.', in *COLING '90*; Sato S 1995, 'MBT2: A Method for Combining Fragments of Examples in Example-based Translation', *Artificial Intelligence*, **75** 1 pp. 31-49; Güvenir H A and Cicekli I 1998, 'Learning Translation Templates from Examples', *Information Systems*, **23** 6 pp. 353-636; Watanabe H 1995, 'A Model of a Bi-Directional Transfer Mechanism Using Rule Combinations', *Machine Translation*, **10** 4 pp. 269-291; Al-Adhaileh M H and Kong T E , 'A Flexible Example-based Parser based on the SSTC', in *Proceedings of COLING-ACL* '98, pp. 687-693.

Our earlier European application No. 01309152.5, filed on 29 October 2001, Agents Ref: J00043743EP, Clients Ref: A26213, describes a machine translation system in which example source and target translation texts are manually marked up to indicate dependency (for which, see Mel'cuk I A 1988, Dependency Syntax: theory and practice, State University of New York Albany) and alignment between words which are translations of each other. The system described there then decomposes the source and target texts into smaller units by breaking the texts up at the alignments. The translations units represent small corresponding phrases in the source and target languages. Because they are smaller than the original text, they are more general. The translation system can then make use of the translation units to translate new source language texts which incorporate the translation units in different combinations to those in the example texts from which they were derived.

Our earlier European applications 01309153.3, filed 29 October 2001, Agents Ref: J00043744EP, Clients Ref: A26214, and 01309156.6, filed 29 October 2001, Agents Ref: J00043742EP, Clients Ref: A26211, describe improvements on this technique. All three of these applications are incorporated herein in their entirety by reference.

Our earlier applications described manual alignments of words in the source and target languages. In most other proposed systems, manual alignment is performed, although lexical alignment is sometimes done automatically (see Brown P F, Cocke J, della Pietra S A, della Pietra V J, Jelinek F, Lafferty J D, Mercer R L and Roossin P S 1990, 'A Statistical Approach to Machine Translation', Computational Linguistics, 16 2 pp. 79-85 and Güvenir H A and Cicekli I 1998, 'Learning Translation Templates from Examples', Information Systems, 23 6 pp. 353-636).

An aim of the present of the invention is to provide an automatic system for obtaining translation units for use in subsequent translation, for example for systems as described in our above referenced earlier European applications.

The present invention is defined in the claims appended hereto, with advantages, preferred features and embodiments which will be apparent from the description, claims and drawings.

It may advantageously be used together with the invention described in our European application filed on the same day (28 March 2002) and through the same office as this application, agent's reference J00044151EP, applicant's reference A30152.

The invention is generally applicable to methods of machine translation. Embodiments of the invention are able to generalise from a relatively small number of examples of text, and this allows such embodiments to be used with the text held in, for example, a translation memory as described by Melby A K and Wright S E 1999, 'Leveraging Terminological Data For Use In Conjunction With Lexicographical Resources', in *Proceedings of the 5th International Congress on Terminology and Kowledge Representation*, pp. 544-569.

Embodiments of the present invention will now be described, by way of example only, with reference to the accompanying drawings in which:

Figure 1 is block diagram showing the components of a computer translation system according to a first embodiment;

Figure 2 is a block diagram showing the components of a computer forming part of Figure 1;

Figure 3 is a diagram showing the programs and data present within the computer of Figure 2;

Figure 4 is an illustrative diagram showing the stages in translation of text according to the present invention;

Figure 5 is a flow diagram showing an annotation process performed by the apparatus of Figure 1 to assist a human user in marking up example texts;

Figure 6 shows a screen produced during the process of Figure 5 to allow editing;

Figure 7 is a flow diagram giving a schematic overview of the subsequent processing steps performed in a first embodiment to produce data for subsequent translation;

Figure 8 shows a screen display produced by the process of Figure 5 illustrating redundant levels;

Figure 9 is a flow diagram illustrating the process for eliminating the redundant levels of Figure 8; and

Figure 10 illustrates a structure corresponding to that of Figure 8 after the performance of the process of Figure 9;

Figure 11 shows the dependency graph produced by the process of Figure 5 for a source text (in English) which contains a relative clause;

Figure 12 is a flow diagram showing the process performed by the first embodiment on encountering such a relative clause; and

Figure 13 corresponds to Figure 11 and shows the structure produced by the process of Figure 12;

Figure 14 shows the structure produced by the process of Figure 5 for a source text which includes a topic shifted phrase;

Figure 15 is a flow diagram showing the process performed by the first embodiment in response to a topic shifted phrase; and

Figure 16 corresponds to Figure 14 and shows the structure produced by the process of Figure 15;

Figure 17 is a flow diagram showing an overview of the translation process performed by the embodiment of Figure 1;

Figure 18 (comprising Figures 18a and 18b) is a flow diagram showing in more detail the translation process of the first embodiment;

Figures 19a-19f show translation components used in a second embodiment of the invention to generate additional translation components for generalisation;

Figure 20 is a flow diagram showing the process by which such additional units are created in the second embodiment;

Figure 21 is a flow diagram showing the first stage of the process of generating restrictions between possible translation unit combinations according to a third embodiment;

Figure 22 is a flow diagram showing the second stage in the process of the third embodiment;

Figure 23 (comprising Figures 23a and 23b) is a flow diagram showing the third stage in the process of the third embodiment.

Figure 24 is a flow diagram showing the process of generating new translations units in a preferred embodiment of the invention;

Figure 25 is a flow diagram showing in greater detail the process of locating an existing translation unit to be modified, forming part of the process of Figure 24; and

Figure 26 is a flow diagram showing in greater detail the process of modifying the translation unit, forming part of the process of Figure 24.

## First Embodiment

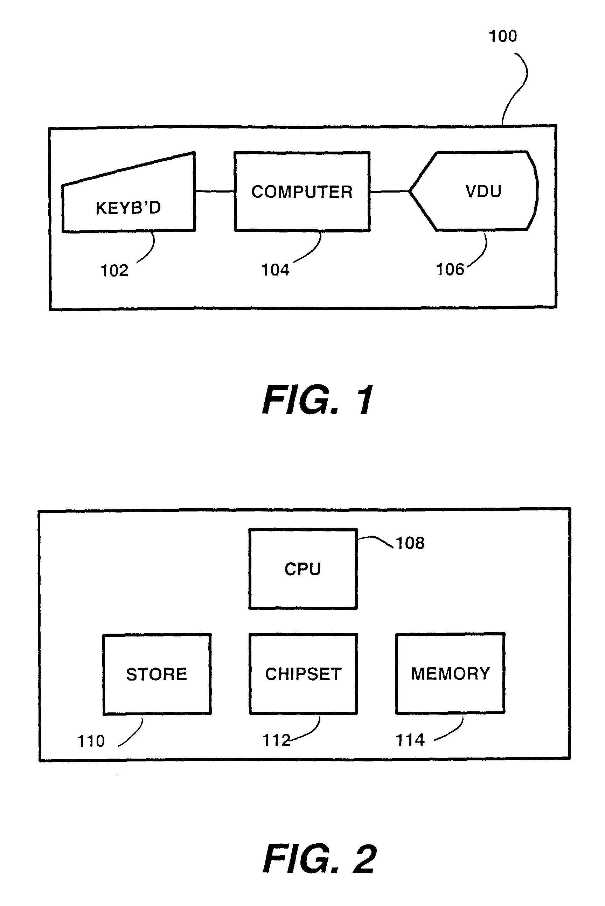

Figure 1 shows apparatus suitable for implementing the present invention. It consists of a work station 100 comprising a keyboard 102, computer 104 and visual display unit 106. For example, the work station 100 may be a high performance personal computer or a sun work station.

Figure 2 shows the components of a computer 104 of Figure 1, comprising a CPU 108 (which may be a Pentium III or reduced instruction set (RISC) processor 108). Connected to the CPU is a peripheral chip set 112 for communicating with the keyboard, VDU and other components; a memory 114 for storing executing programs and working data; and a store 110 storing programs and data for subsequent execution. The store 110 comprises a hard disk drive; if the hard disk drive is not removable then the store 110 also comprises a removable storage device such as a floppy disk drive to allow the input of stored text files.

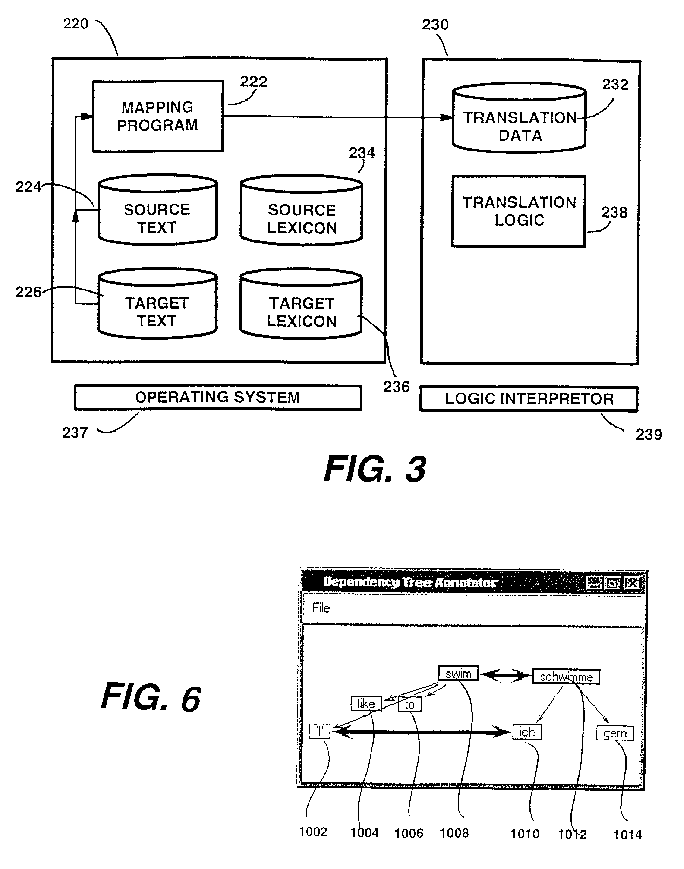

Figure 3 illustrates the programs and data held on the store 110 for execution by the CPU 108. They comprise a development program 220 and a translation program 230.

The development program comprises a mapping program 222 operating on a source text file 224 and a target text file 226. In this embodiment, it also comprises a source lexicon 234 storing words of the source language together with data on their syntactic and semantic properties, and a target language lexicon 236 storing similar information from the target language, together with mapping data (such as the shared identifiers of the Eurowordnet Lexicon system) which link source and target words which are translations of each other.

The translation program comprises a translation data store 232 stores translation data in the form of PROLOG rules, which are defined by the relationships established by the mapping program 222. A translation logic program 238 (for example a PROLOG program) defines the steps to be taken by the translation program using the rules 232, and a logic interpreter program 239 interprets the translation logic and rules into code for execution by the CPU 108.

Finally, an operating system 237 provides a graphic user interface, input/output functions and the well known functions. The operating system may, for example, be Microsoft Windows™, or Unix or Linux operating in conjunction with X-Windows.

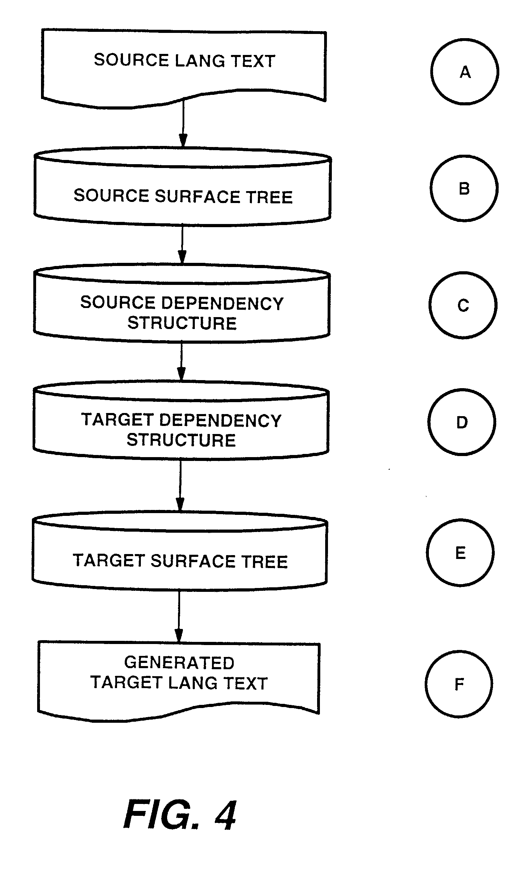

Figure 4 is an overview of the translation process. Source language text (A) is parsed to provide data representing a source surface tree (B) corresponding to data defining a source dependency structure (C), which is associated with a target dependency structure (D). The target dependency structure is then employed to generate a target surface tree (E) structure, from which target language text (F) is generated.

These steps will be discussed in greater detail below. First, however, the process performed by the development program 220 in providing the data for use in subsequent translations will be discussed.

**Translation Development Program**

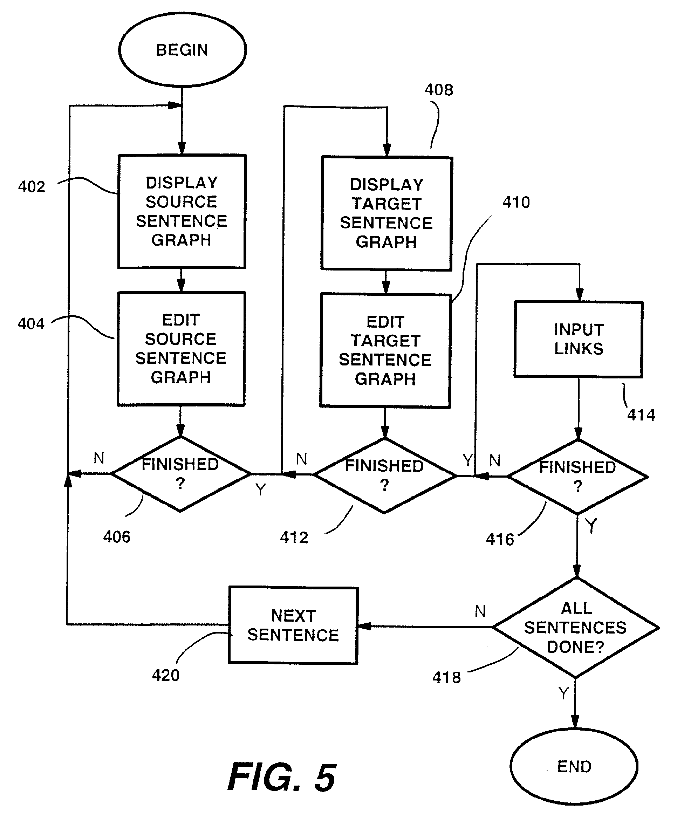

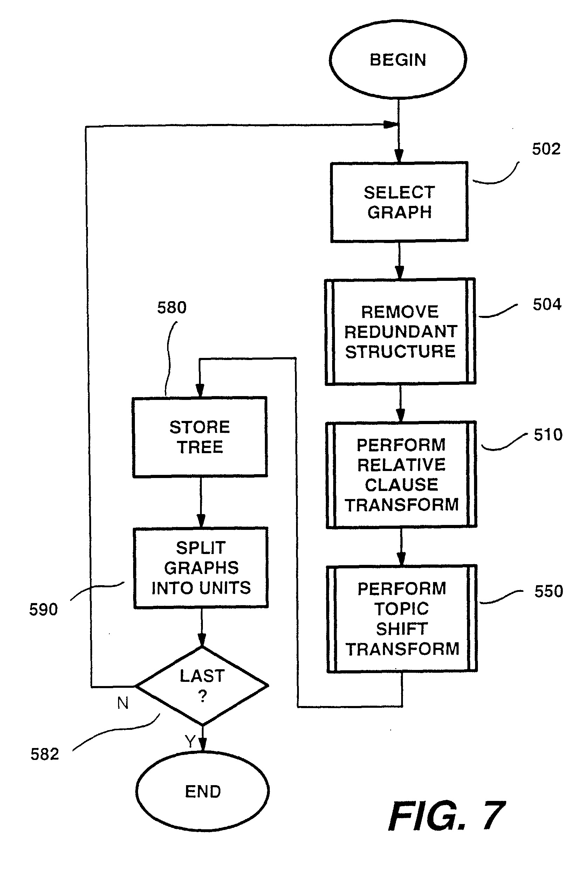

Referring to Figure 5, in a step 402, the mapping program 222 creates a screen display (shown in Figure 6) comprising the words of a first sentence of the source document and the corresponding sentence of the translation document (in this case, the source document has the sentence "I like to swim" in English, and the target document has the corresponding German sentence "Ich schwimme gern"). Each word is divided within a graphic box 1002-1008, 1010-1014. The mapping program allows the user to move the words vertically, but not to change their relative horizontal positions (which correspond to the actual orders of occurrence of the words in the source and target texts).

The user (a translator or linguist) can then draw (using the mouse or other cursor control device) dependency relationship lines ("links") between the boxes containing the words. In this case, the user has selected "swim" (1008) as the "head" word in the English text and "I" (1002), "like" (1004) "to" (1006) as the "daughters" by drawing dependency lines from the head 1008 to each of the daughters 1002-1006.

At this point, it is noted that all of the daughters 1002-1006 in the source language in this case lie to the left of the head 1008; they are termed "left daughters". One of the heads is marked as the surface root of the entire sentence (or, in more general terms, block of text).

In the target language text of Figure 6, it will be seen that "Ich" (1010) lies to the left of "schwimme" (1012) and is therefore a "left daughter", whereas "gern" (1014) lies to the right and is therefore a "right daughter". Left and right daughters are not separately identified in the dependency graphs but will be stored separately in the surface graphs described below.

The editing of the source graph (step 404) continues until the user has linked all words required (step 406). The process is then repeated (steps 408, 410, 412) for the target language text (1012-1014).

Once the dependency graphs have been constructed for the source and target language texts, in step 414 the program 222 allows the user to provide connections between words in the source and target language texts which can be paired as translations of each other. In this case, "I" (1002) is paired with "Ich" (1010) and "swim" (1008) with "schwimme" (1012).

Not every word in the source text is directly translatable by a word in the target text, and the user will connect only words which are a good direct translation of each other. On slightly more general terms, words may occasionally be connected if they are at the heads of a pair of phrases which are direct translations, even if the connected words themselves are not.

However, it is generally the case in this embodiment that the connection (alignment) indicates not only that phrases below the word (if any) are a transaction pair but that the head words themselves also form such a pair.

When the user has finished (step 416), it is determined whether further sentences within the source and target language files remain to be processed and, if not, the involvement of the user ends and the user interface is closed. If further sentences remain, then the next sentence is selected (step 420) and the process resumes as step 402. At this stage, the data representing the translation examples now consists of a set of nodes, some of which are aligned (connected) with equivalents in the other language; translation unit records; and links between them to define the graph.

The present invention also provides for automatic processing source and target language texts, as will be disclosed in greater detail below.

**Processing the example graph structure data**

Referring to Figure 7, the process performed in this embodiment by the development program 220 is as follows. In step 502, a dependency graph (i.e. the record relating to one of the sentences) is selected, and in step 504, redundant structure is removed (see below).

In step 510, a relative clause transform process (described in greater detail below) is performed. This is achieved by making a copy of the dependency graph data already generated, and then transforming the copy. The result is a tree structure.

In step 550, a topic shift transform process is performed (described in greater detail below) on the edited copy of the graph. The result is a planar tree retaining the surface order of the words, and this is stored with the original dependency graph data in step 580.

Finally, in step 590, each graph is split into separate graph units. Each graph unit record consists of a pair of head words in the source and target languages, together with, for each, a list of right daughters and a list of left daughters (as defined above) in the surface three structure, and a list of daughters in the dependency graph structure. In step 582, the next dependency graph is selected, until all are processed.

## Removal of Redundant Layers

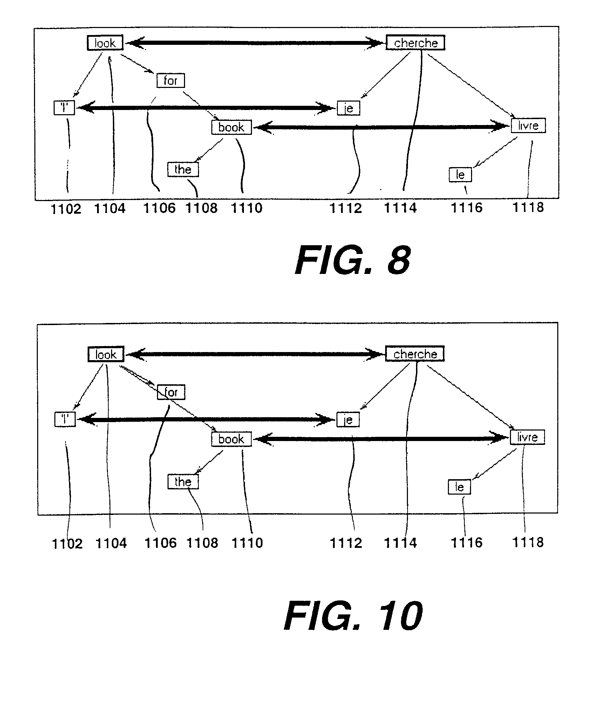

Step 504 will now be discussed in more detail. Figure 8 illustrates the marked up dependency graph for the English phrase "I look for the book" and the French translation "Je cherche le livre".

In the English source text, the word "for" (1106) is not aligned with a word in French target text, and therefore does not define a translatable word or phrase there is no subset of words that "for" dominates (including itself) that is a translation of a subset of words in the target language. Therefore, the fact that the word "for" dominates "book" does not assist in translation.

In this embodiment, therefore, the superfluous structure represented by "for" between "look" 1104 and "book" 1110 is eliminated. These modifications are performed directly on the dependency data, to simplify the dependency graph.

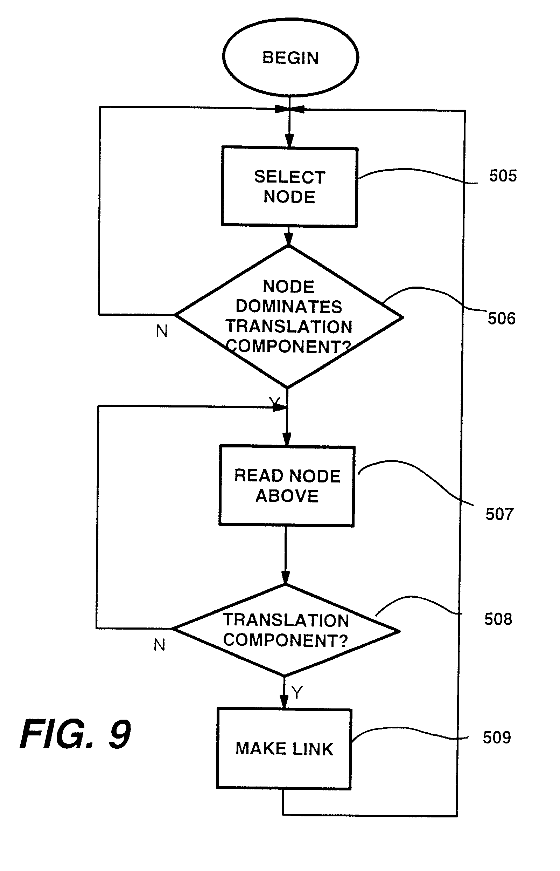

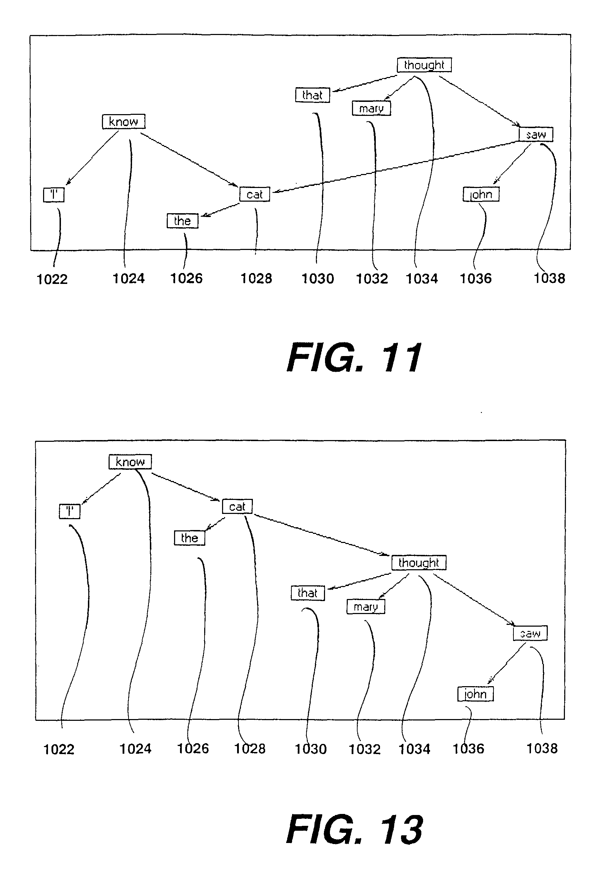

Referring to Figures 9 and 10, in step 505, a "leaf" node (i.e. hierarchically lowest) is selected and then in step 506, the next node above is accessed. If this is itself a translation node (step 507), then the process returns to step 505 to read the next node up again.

If the node above is not a translation node (step 507) then the next node up again is read (step 508). If that is a translation node (step 509), then the original node selected in step 505 is unlinked and re-attached to that node (step 510). If not, then the next node up again is read (step 508) until a translation node is reached. This process is repeated for each of the nodes in turn, from the "leaf" nodes up the hierarchy, until all are processed. Figure 10 shows the link between nodes 1106 and 1110 being replaced by a link from node 1104 to node 1110.

The removal of this redundant structure greatly simplifies the implementation of the translation system, since as discussed below each translation component can be made to consist of a head and its immediate descendents for the source and target sides. There are no intermediate layers. This makes the translation components look like aligned grammar rules (comparable to those used in the Rosetta system), which means that a normal parser program can be used to perform the source analysis and thereby produce a translation.

## Producing A Surface Tree

The next step performed by the development program 220 is to process the dependency graphs derived above to produce an associated surface tree. The dependency graphs shown in Figure 6 are already in the form of planar trees, but this is not invariably the case.

The following steps will use the dependency graph to produce a surface tree structure, by making and then transforming a copy of the processed dependency graph information derived as discussed above.

## Relative Clause Transformation ("Relativisation")

Figure 11 shows the dependency graph which might be constructed by the user for the phrase "I know the cat that Mary thought John saw" in English, consisting of nodes 1022-1038. In a relative clause such as that of Figure 11, the dependency graph will have more than one root, corresponding to the main verb ("know") and the verbs of dependent clauses ("thought"). The effect is that the dependency graph is not a tree, by virtue of having two roots, and because "cat" (1028) is dominated by two heads ("know" (1024) and "saw" (1038)).

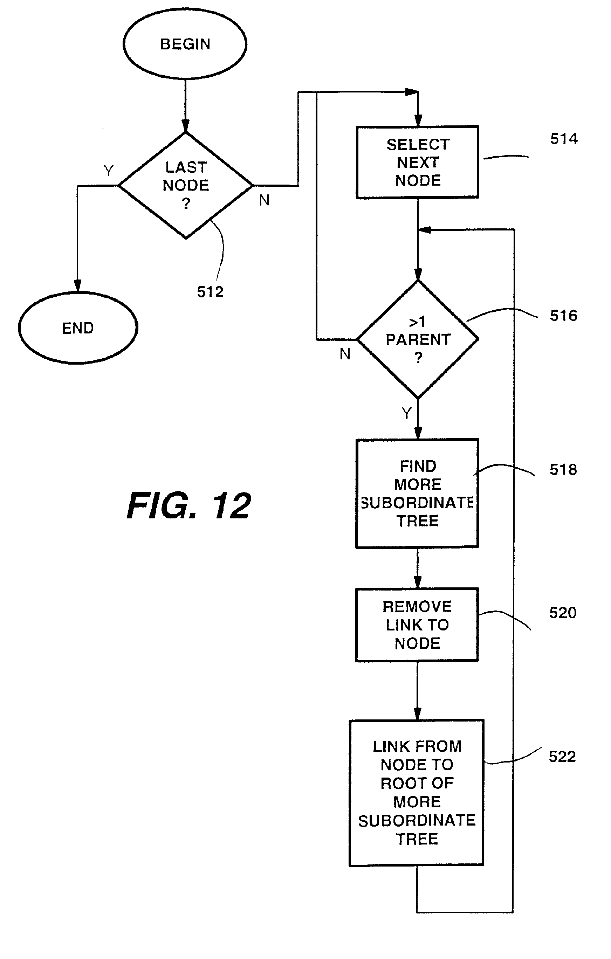

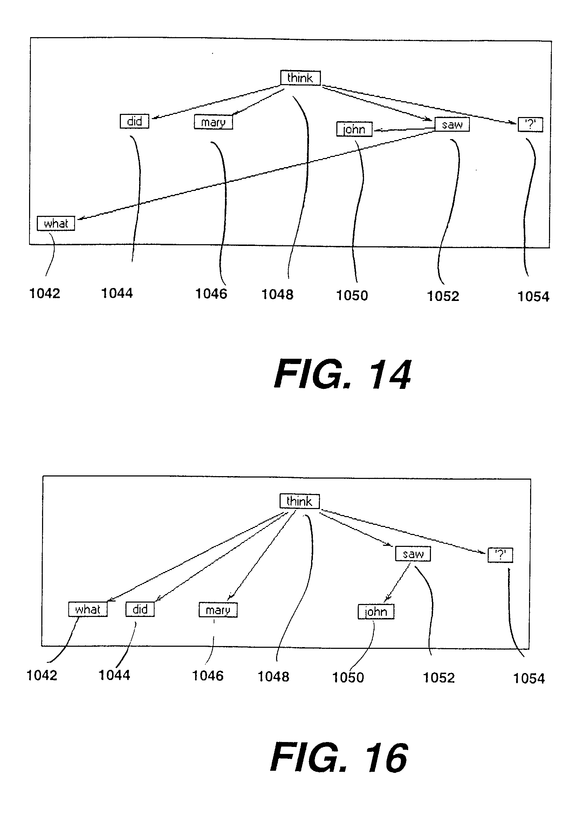

Referring to Figures 12 and 13, and working on the assumption that the dependency graphs comprise a connected set of trees (one tree for each clause) joined by sharing common nodes, of which one is the principal tree, an algorithm for transforming the dependency graph into a tree is then;

Start with the principal root node as the current node.

Mark the current node as 'processed'.

For each child of the current node,

check whether this child has an unprocessed parent.

For each such unprocessed parent, find the root node that dominates this parent (the subordinate root).

Detach the link by which the unprocessed parent dominates the child and

Insert a link by which the child dominates the subordinate root.

For each daughter of the current node,

make that daughter the current node and continue the procedure until

there are no more nodes.

As Figure 12 shows, in step 512, it is determined whether the last node in the graph has been processed, and, if so, the process ends. If not, then in step 514 the next node is selected and, in step 516, it is determined whether the node has more than one parent. Most nodes will only have one parent, in which case the process returns to step 514.

Where, however, a node such as "cat" (1028) is encountered, which has two parents, the more subordinate tree is determined (step 518) (as that node which is the greater number of nodes away from the root node of the sentence), and in step 520, the link to it (i. e. in Figure 11, the link between 1038 and 1028) is deleted.

In step 522, a new link is created, from the node to the root of the more subordinate tree. Figure 13 shows the link now created from "cat" (1028) to "thought" (1034).

The process then returns to step 516, to remove any further links until the node has only one governing node, at which point step 516 causes flow to return to step 514 to process the next node, until all nodes of that sentence are processed.

This process therefore has the effect of generating from the original dependency graph an associated tree structure. Thus, at this stage the data representing the translation unit comprises a version of the original dependency graph, together with a transformed graph which now constitutes a tree retaining the surface structure.

### Topic Shift Transformation ("Topicalisation")

The tree of Figure 13 is a planar tree, but this is not always the case; for example where a phrase (the topic) is displaced from its "logical" location to appear earlier in the text. This occurs, in English, in "Wh-" questions, such as that shown in Figure 14, showing the question "What did Mary think John saw?" in English, made up of the nodes 1042-1054 corresponding respectively to the words. Although the dependency graph here is a tree, it is not a planar tree because the dependency relationship by which "saw" (1052) governs "what" (1042) violates the projection constraint.

Referring to Figures 14 to 16, the topic shift transform stage of step 550 will now be described in greater detail. The algorithm operates on a graph with a tree-topology, and so it is desirable to perform this step after the relativisation transform described above.

The general algorithm is, starting from a "leaf" (i.e. hierarchically lowest) node,

For each head (i.e. aligned) word, (the current head), identify any daughters that violate the projection (i.e. planarity) constraint (that is, are there intervening words that this word does not dominate either directly or indirectly?)

For each such daughter, remove the dependency relation (link) and attach the daughter to the governing word of the current head.

Continue until there are no more violations of the projection constraint

For each head word until the last (step 552), for the selected head word (step 544), for each link to a daughter node until the last (step 556), a link to a daughter node (left most first) is selected (step 558). The program then examines whether that link violates the planarity constraint, in other words, whether there are intervening words in the word sequence between the head word and the daughter word which are not dominated either direct or indirectly by that head word. If the projection constraint is met, the next link is selected (step 558) until the last (step 556).

If the projection constraint is not satisfied, then the link to the daughter node is disconnected and reattached to the next node up from the current head node, and it is again examined (step 560) whether the planarity constraint is met, until the daughter node has been attached to a node above the current head node where the planarity constraint is not violated.

The next link to a daughter node is then selected (step 558) until the last (step 556), and then the next head node is selected (step 554) until the last (step 552).

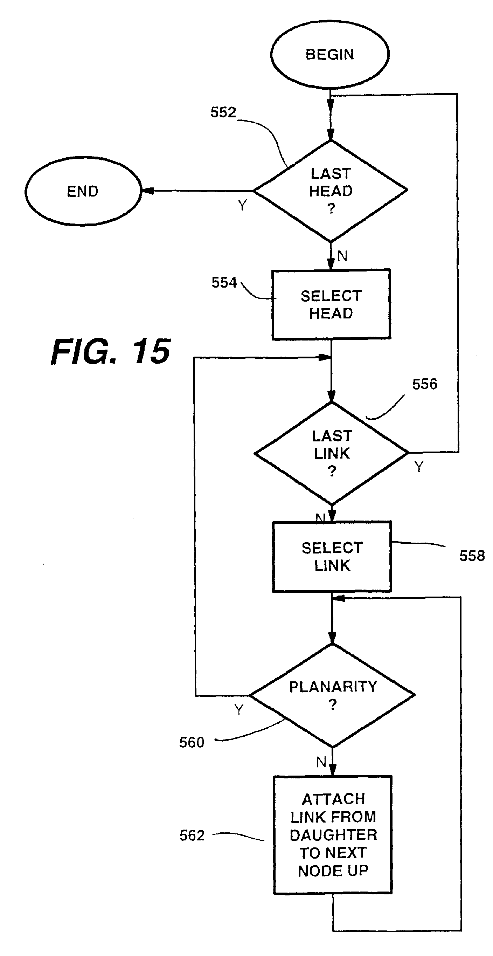

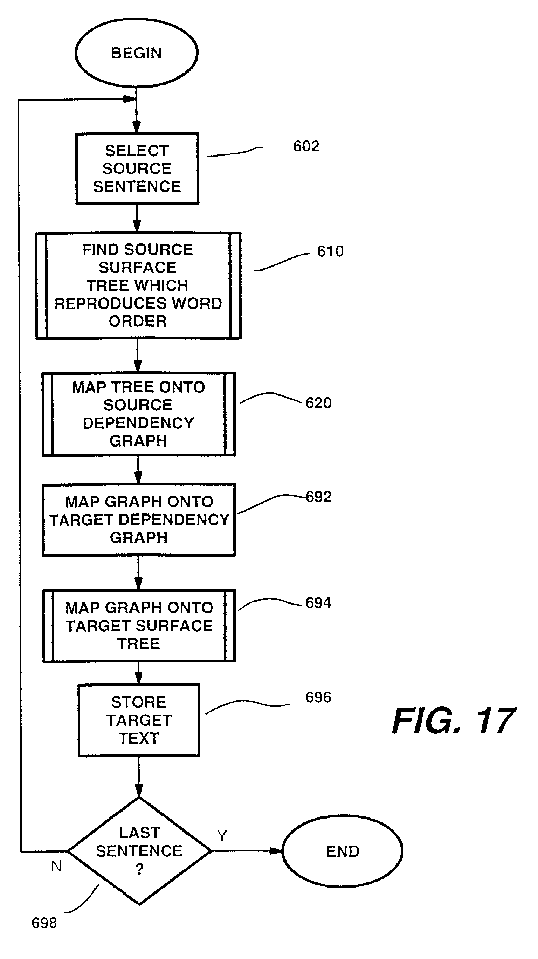

Accordingly, after performing the topicalisation transform of Figure 15, the result is a structure shown in Figure 16 which is a planar tree retaining the surface structure, and corresponding to the original dependency graph.

### Splitting the graphs into translation units

After performing the topicalisation and relativisation transforms, the data record stored comprises, for each sentence, a dependency graph and a surface tree in the source and target languages. Such structures could only be used to translate new text in which those sentences appeared verbatim. It is more useful to split up the sentences into smaller translation component units (corresponding, for example, to short phrases), each headed by a "head" word which is translatable between the source and target languages (and hence is aligned or connected in the source and target graphs).

Accordingly, in step 590, the development program 220 splits each graph into a translation unit record for each of the aligned (i.e. translated) words.

Each translation unit record consists of a pair of head words in the source and target languages, together with, for each, a list of right surface daughters and a list of left surface daughters, and a list of the dependency graph daughters. These lists may be empty. The fields representing the daughters may contain either a literal word ("like" for example) or a placeholder for another translation unit. A record of the translation unit which originally occupied the placeholder ("I" for example) is also retained at this stage. Also provided are a list of the gap stack operations performed for the source and target heads, and the surface daughters.

The effect of allowing such placeholders is thus that, in a translation unit such as that headed by "swim" in the original sentence above, the place formerly occupied by "I" can now be occupied by another translation unit, allowing it to take part in other sentences such as "red fish swim". Whereas in a translation system with manually crafted rules the translation units which could occupy each placeholder would be syntactically defined (so as to allow, for example, only a singular noun or noun phrase in a particular place), in the present embodiment there are no such restraints at this stage.

During translation, using PROLOG unification operations, the surface placeholder variables are unified with the dependency placeholders, and any placeholders involved in the gap stack operations. The source dependency placeholders are unified with corresponding target dependency placeholders.

The source surface structures can now be treated as straightforward grammar rules, so that a simple chart parser can be used to produce a surface analysis tree of new texts to be translated, as will be discussed in greater detail below.

It is to be noted that, since the process of producing the surface trees alters the dependencies of daughters upon heads, the lists of daughters within the surface trees will not identically match those within the dependency graphs in every case, since the daughter of one node may have been shifted to another in the surface tree, resulting in it being displaced from one translation unit record to another; the manner in which this is handled is as follows:

Where the result of forming the transformation to derive the surface structure is to display a node in the surface representation from one translation unit to another, account is taken of this by using a stack or equivalent data structure (referred to in PROLOG as a "gap stack" and simulated using pairs of lists referred to as "threads").

For translation units where the list of surface daughter nodes contains an extra node relative to the dependency daughters or vice versa as a result of the transformation process), the translation unit record includes an instruction to pull or pop a term from the stack, and unify this with the term representing the extra dependent daughter.

Conversely, where a translation unit contains an extra surface daughter which does not have an associated dependent daughter term, the record contains an instruction to push a term corresponding to that daughter onto the stack. The term added depends upon whether the additional daughter arose as a result of the topicalisation transform or the relativisation transform.

Thus, in subsequent use in translation, when a surface structure is matched against input source text and contains a term which cannot be accounted for by its associated dependency graph, that term is pushed on to the stack and retrieved to unify with a dependency graph of a different translation unit.

Since this embodiment is written in PROLOG, the representation between the surface tree, the gap stack and the dependency structure can be made simply by variable unification. This is convenient, since the relationship between the surface tree and the dependency structure is thereby completely bi-directional. This enables the relationships used while parsing the source text (or rather, their target text equivalents) to be used in generating the target text. It also ensures that the translation apparatus is bi-directional; that is, it can translation from A to B as easily as from B to A.

Use of a gap stack in similar manner to the present embodiment is described in Pereira F 1981, 'Extraposition Grammars', *American Journal of Computational Linguistics,* **7** 4 pp. 243-256, and Alshawi H 1992, *The Core Language Engine,* MIT Press Cambridge, incorporated herein by reference.

Consider once more the topicalisation transform illustrated by the graphs in Figures 14 and 16. The source sides of the translation units that are derived from these graphs are (slightly simplified for clarity),

    **component #0:**

        head ='think'
        left surface daughters = ['what','did','mary'],
        right surface daughters = [#1]
        dependent daughters = ['did','mary',#1]
    **component #1:**
        head = 'saw',
        left surface daughters = ['john'],
        right surface daughters = []
        dependent daughters = ['john','what']

It can be seen that in component #0 we have 'what' in the surface daughters list, but not in the dependant daughters list. Conversely, component #1 has 'what' in its dependent daughters list, but not in its surface daughters list.

In component #0, it was the daughter marked #1 that contributed the extra surface daughter when the dependency graph to surface tree mapping took place. So, we wish to add 'what' to the gap stack for this daughter. Conversely, in component #1, we need to be able to remove a term from the gap stack that corresponds to the extra dependent daughter ('what') in order to be able to use this component at all. Therefore, the head of this component will pop a term off the gap stack, which it will unify with the representation of 'what'. The modified source side component representations then look like this,

    **component #0:**
        head = 'think'
        left surface daughters = ['what','did','mary'],
        right surface daughters = [#1:push(Gapstack,'what')]
        dependent daughters = ['did','mary',#1]
    **component #1:**
        head ='saw', pop(Gapstack, 'what'),
        left surface daughters = ['john'],
        right surface daughters = []
        dependent daughters = ['john','what']

The components for a relativisation transform look a little different. To illustrate this, consider the example in Figures 11 and 13. In this example there will be an extra root node in the dependency structure. That means that there will be a component with an extra surface daughter and this surface daughter will cause the head of the component to be pushed onto the gap stack. In this example, 'cat' is the head of the relevant component and 'thought' is the surface daughter (of 'cat') that will push the representation of 'cat' onto its gap stack. This will have the effect of disconnecting 'thought' in the dependency graph, so making it a root, and making 'cat' a dependent daughter of whichever head pops it off the gap stack (in this case 'saw').

The representation then for the source side of the graphs in Figures 11 and 13 are (again simplified for clarity),

    **component #0:**
        head ='know'
        left surface daughters=['I'],
        right surface daughters =[#1

```
        dependent daughters = ['I',#1]
    component #1:
        head = 'cat',
        left surface daughters = ['the'],
        right surface daughters = [#2:push(Gapstack,'cat')]
        dependent daughters = ['the']
    component #2:
        head ='thought',
        left surface daughters = ['that', 'mary'],
        right surface daughters =[#3],
        dependent daughters =['that','mary',#3]
    component =#3:
        head = 'saw':pop(Gapstack,X),
        left surface daughters = ['john'],
        right surface daughters = [],
        dependent daughters = ['john',X]
```

This example shows 'cat' being added to the gap stack for the daughter #2 of component #1. Also, a term (in this case a variable) is popped off the gapstack at the head of component #3. This term is unified with the dependent daughter of component #3.

## Translation

Further aspects of the development program will be considered later. However, for a better understanding of these aspects, it will be convenient at this stage to introduce a description of the operation of the translation program 230. This will accordingly be discussed.

The source surface structures within the translation components are treated in this embodiment as simple grammar rules so that a surface analysis tree is produced by the use of a simple chart parser, as described for example in James Allen, "Natural Language Understanding", second edition, Benjamin Cummings Publications Inc., 1995, but modified to operate from the head or root outwards rather than from right to left or vice versa. The parser attempts to match the heads of source surface tree structures for each translation unit against each word in turn of the text to be translated. This produces a database of packed edges using the source surface structures, which is then unpacked to find an analysis.

The effect of providing a unification of the surface tree terms and the dependency tree terms using the stack ensures that the source dependency structure is created at the same time during unpacking.

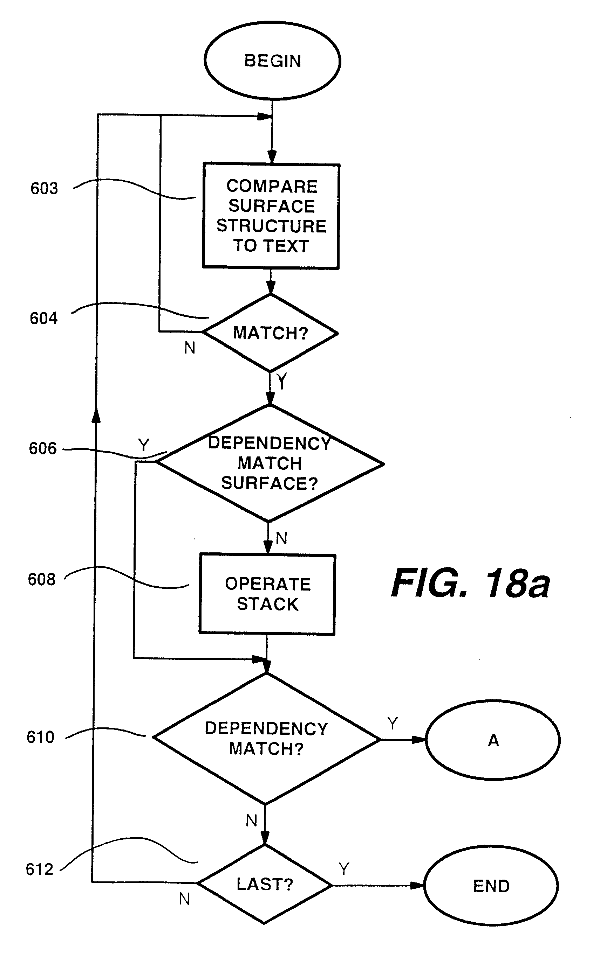

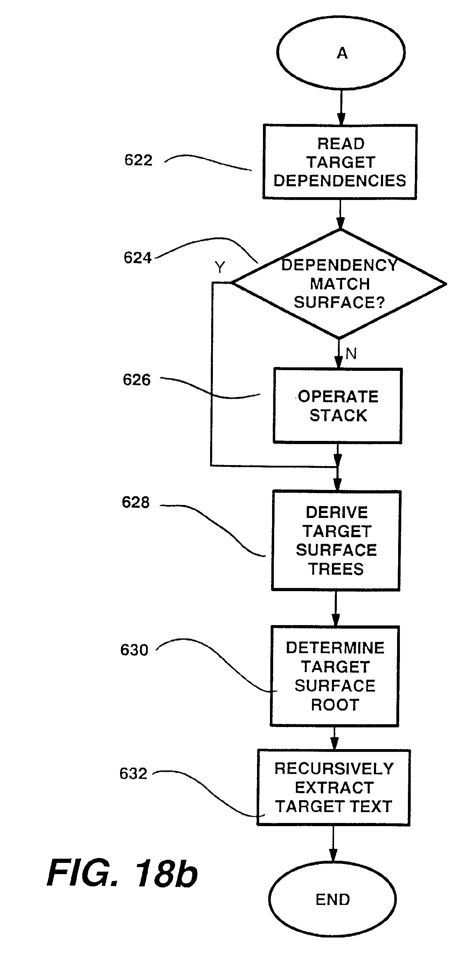

Whilst the actual order of implementation of the rules represented by the surface and dependency structures is determined by the logic interpreter 239, Figures 17 and 18 notionally illustrate the process.

In a step 602 of Figure 17, a sentence of the source language file to be translated is selected. In step 610, a source surface tree of a language component is derived using the parser, which reproduces the word order in the input source text. In step 620, the corresponding dependency graph is determined. In step 692, from the source dependency graph, the target dependency graph is determined. In step 694, from the target dependency graph, the target surface tree is determined, and used to generated target language text, in step 696, the target language text is stored. The process continues until the end of the source text (step 698).

Figures 18a and 18b illustrate steps 610 to 694 in greater detail. In step 603, each surface structure is compared in turn with the input text. Each literal surface daughter node (node storing a literal word) has to match a word in the source text string exactly. Each aligned surface daughter (i.e. surface daughter corresponding to a further translation unit) is unified with the source head record of a translation unit, so as to build a surface tree for the source text. Most possible translation units will not lead to a correct translation. Those for which the list of daughters cannot be matched are rejected as candidates.

Then, for each translation unit in the surface analysis, using the stored stack operations for that unit in the PROLOG unification process, the stack is operated (step 608) to push or pull any extra or missing daughters. If (step 610) the correct number of terms cannot be retrieved for the dependency structure then the candidate structure is rejected and the next selected until the last (step 612). Where the correct translation components are present, exactly the correct number of daughters will be passed through the stack.

Where a matching surface and dependency structure (i.e. an analysis of the sentence) is found (step 610), then, referring to Figure 18b, for each translation unit in the assembled dependency structure, the corresponding target head nodes are retrieved (step 622) so as to construct the corresponding target dependency structure. The transfer between the source and target languages thus takes place at the level of the dependency structure, and is therefore relatively unaffected by the vagaries of word placement in the source and/or target languages.

In step 626 the stack is operated to push or pop daughter nodes. In step 628, the target surface structure is determined from the target dependency structure.

In step 630, the root of the entire target surface structure is determined by traversing the structure along the links. Finally, in step 632, the target text is recursively generated by traversing the target surface structure from the target surface root component, using PROLOG backtracking, to extract the target text from the target surface head and daughter components.

## Second embodiment - Generalisation of translation units

Having discussed the essential operation of the first embodiment, further preferred features (usable independently of those described above) will now be described.

Translation units formed by the processes described above consist, for the target and source languages, of a literal head (which is translated) and a number of daughters which may be either literal or non-literal, the latter being variable representing connection points for other translation units. Using a translation unit, each of the literal daughters has to match the text to be translated exactly and each of the non-literal daughters has to dominate another translation unit.

The set of rules (which is what the translation unit data now comprise) were derived from example text. The derivation will be seen to have taken no account of syntactic or semantic data, except in so far as this was supplied by the human user in marking up the examples. Accordingly, the example of a particular noun, with, say, one adjective cannot be used to translate that noun when it occurs with zero, or two or more, adjectives. The present embodiment provides a means of generalising from the examples given. This reduces the number of examples required for an effective translation system or, viewed differently, enhances the translation capability of a given set of examples.

Generalisation is performed by automatically generating new "pseudo translation units", whose structure is based on the actual translation units derived from marked up examples. Pseudo translation units are added when this reduces the number of distinct behaviours of the set source-target head pairs. In this case, a 'behaviour' is the set of all distinct translation units which have the same source-target head pair.

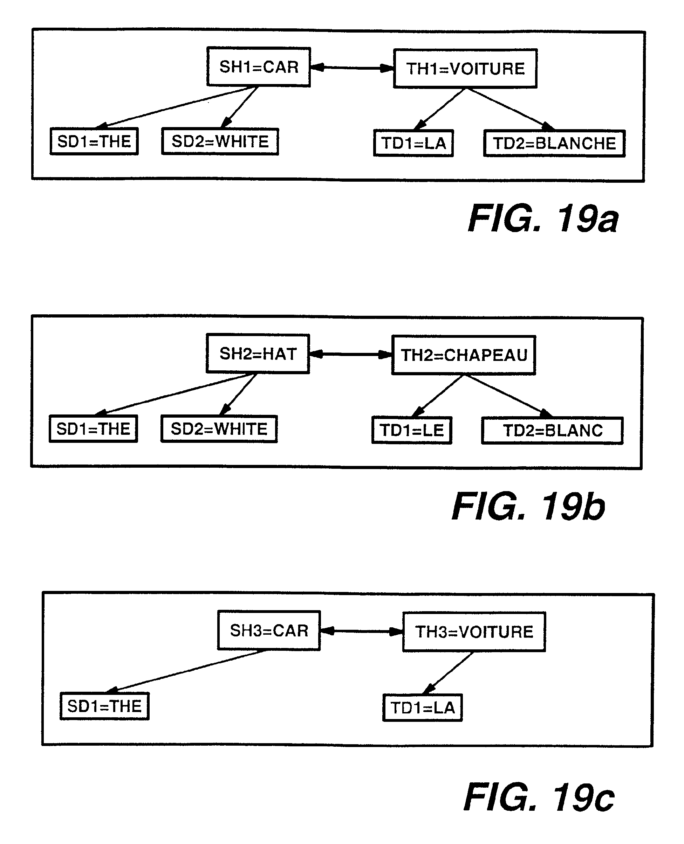

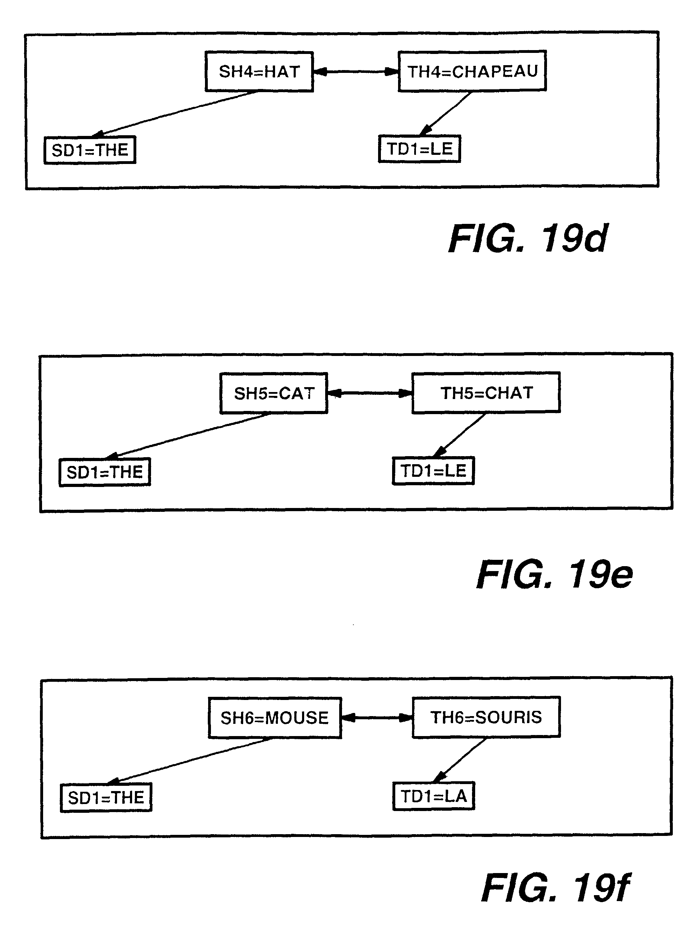

Figure 19 (comprising Figures 19a - 19f) shows 6 example texts of French-English translation pairs; in Figure 19a the source head is "car", with left daughters "the" and "white", and the target head is "voiture" with left daughter "la" and right daughter "blanche"; similarly Figure 19b shows the text "the white hat" ("Le chapeau blanc"); Figure 19c shows the text "the car" ("la voiture"); Figure 19d shows the text "the hat" ("le chapeau"); Figure 19e shows the text "the cat" ("le chat"); and Figure 19f shows the text "the mouse" ("la souris").

On the basis of only these example texts, the translation system described above would be unable to translate phrases such as "the white mouse" or "the white cat".

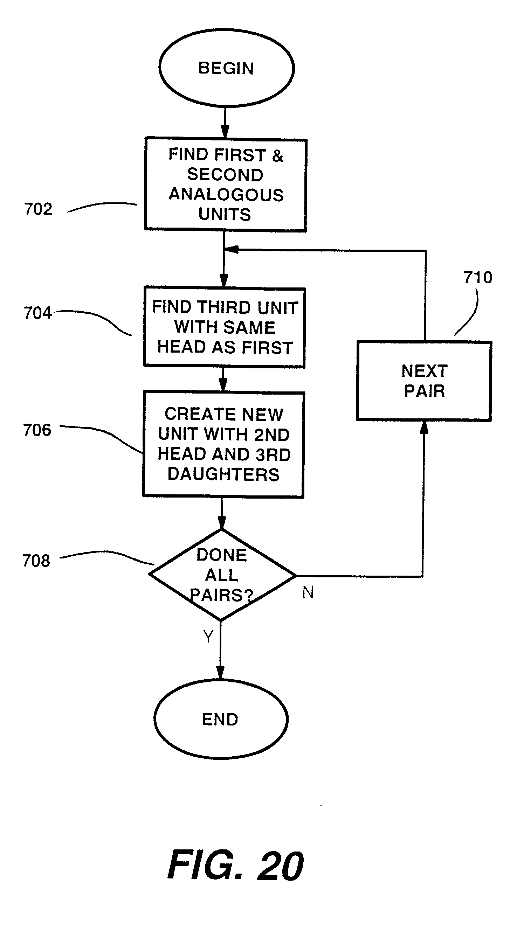

Referring to Figure 20, in a step 702, the development program 220 reads the translation units stored in the store 232 to locate analogous units. To determine whether two translation units are analogous, the source and target daughter lists are compared. If the number of daughters is the same in the source lists and in the target lists of a pair of translation units, and the literal daughters match, then the two translation units are temporarily stored together as being analogous.

After performing step 702, there will therefore be temporarily stored a number of sets of analogous translation units. Referring to the translation examples in Figures 19a-f, the unit shown in Figure 19d with be found to be analogous to that of Figure 19e and the unit shown in Figure 19c is analogous to that shown in Figure 19f. Although the source sides of all four are equivalent (because the definite article in English does not have masculine and feminine versions) the two pairs are not equivalent in their target daughter list.

For each pair of analogous translation units that were identified which differ in their source and target headwords, a third translation unit is located in step 704 which has the same source-target head pair as one of the analogous pair, but different daughters. For example, in relation to the pair formed by Figures 19d and 19e, Figure 19b would be selected in step 704 since it has the same heads as the unit of Figure 19d.

In step 706, a new translation unit record is created which takes the source and target heads of the second analogous unit (in other words not the heads of the third translation unit), combined with the list of daughters of the third translation unit. In this case, the translation unit generated in step 706 for the pair units of 18d and 18e using the unit of Figure 19b would be;

SH7 = Cat

SD1 = The

SD2 = White

TH7 = Chat

TD1 = Le

TD2 = Blanc

Similarly, the new translation unit formed from the analogous pair of Figures 19e and 19f using translation of unit of Figure 19a would be as follows;

SH8 = Mouse

SD1 = The

SD2 = White

TH8 = Souris

TD1 = La

TD2 = Blanche

Accordingly, the translation development program 220 is able to generate new translation examples, many of which will be syntactically correct in the source and target languages.

In the above examples, it will be seen that leaving the function words, such as determiners ("the", "le", "la") as literal strings in the source and target texts of the examples, rather than marking them up as translation units, has the benefit of preventing over-generalisation (e.g. ignoring adjective-noun agreements).

Although the embodiment as described above functions effectively, it could also be possible in this embodiment to make use of the source and target language lexicons 234, 236 to limit the number of pairs which are selected as analogous.

For example, pairs might be considered analogous only where the source head words likewise the target heads of the two are in the same syntactic category. Additionally or alternatively, the choice of third unit might be made conditional on the daughters of the third unit belonging to the same syntactic category or categories as the daughters of the first and second units. This is likely to reduce the number of erroneous generalised pairs produced without greatly reducing the number of useful generalisations.

Where the generalisation of the above described embodiment is employed with the first embodiment, it is employed after the processes described in Figure 7.

### Third Embodiment - Creating and using Head/Daughter Restrictions

If, as described in the first embodiment, any daughter may select any head during translation, many incorrect translations will be produced (in addition to any correct translations which may be produced). If the generalisation process described in the preceding embodiments is employed, this likelihood is further increased. If a number of translations would be produced, it is desirable to eliminate those which are not linguistically sound, or which produce linguistically incorrect target.

A translation system cannot guarantee that the source text itself is grammatical, and so the aim is not to produce a system which refuses to generate ungrammatical target text, but rather one which, given multiple possible translation outputs, will result in the more grammatically correct, and faithful, one.

The system of the present embodiments does not, however, have access to syntactic or semantic information specifying which heads should combine with which daughters. The aim of the present embodiment is to acquire data to perform a similar function by generalising the combinations of units which were present, and more specifically, those which cannot have been present, in the example texts.

Accordingly, in this embodiment, the data generated by the development program 220 described above from the marked up source and target translation text is further processed to introduce restrictions on the combinations of head and daughters words which can be applied as candidates during the translation process.

The starting point is the set of translation pairs that were used to produce the translation units (with, possibly, the addition of new pairs also).

### Inferring Restrictions

Accordingly, in this embodiment, restrictions are developed by the development program 220. Where the generalisation process of the preceding embodiments is used, then this embodiment is performed after the generalisation process. Additionally, the translation units produced by generalisation are marked by storing a generalisation flag with the translation unit record.

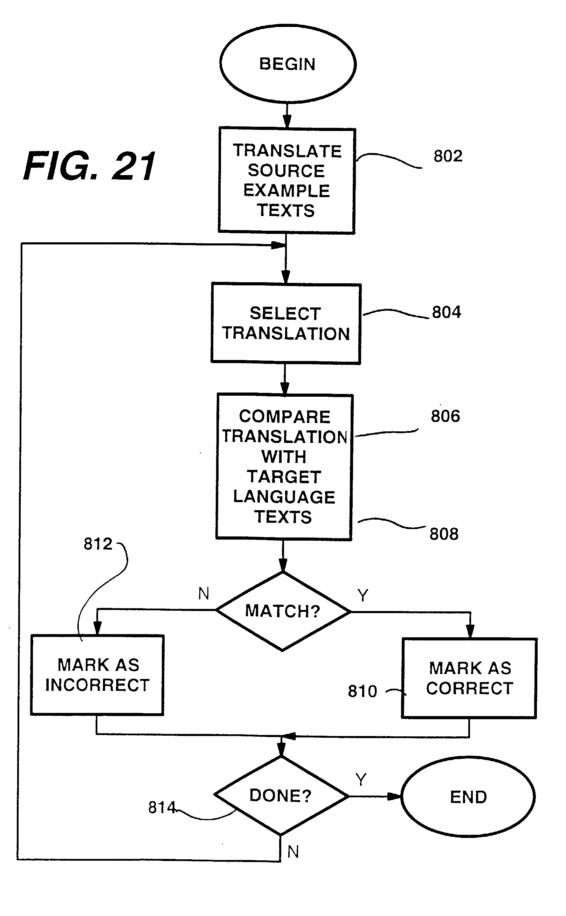

Referring to Figure 21, in a step 802 the development program 220 causes the translator program 230 to execute on the source and the target language sample texts stored in the files 224, 226.

Where the translation apparatus is intended to operate only unidirectionally (that is from the source language to the target language) it will only be necessary to operate on the source language (for example) texts; in the following, this will be discussed, but it will be apparent that in a bidirectional translation system as in this embodiment, the process is also performed in the other direction.

In step 804, one of the translations (there are likely to be several competing translations for each sentence) is selected and is compared with all of the target text examples. If the source-target text pair produced by the translation system during an analysis operation appears in any of the examples (step 808) that analysis is added to a "correct" list (step 810). If not it is added to an "incorrect" list (step 812).

If the last translation has not yet been processed (step 814), the next is selected in step 804. The process is then repeated for all translations of all source text examples.

The goal of the next stage is to eliminate the incorrect analyses of the example texts.

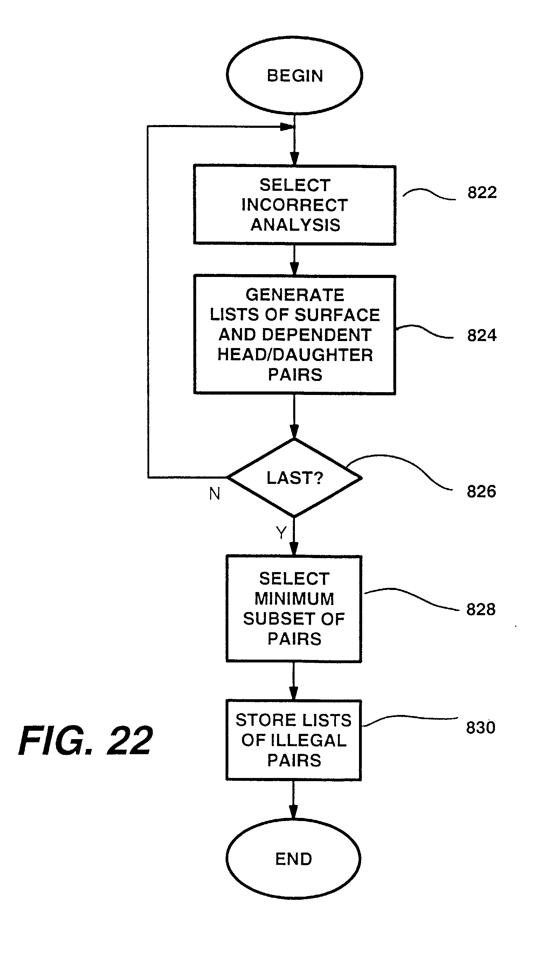

Accordingly, referring to Figure 22, each incorrect analysis from the list produced by the process of Figure 21 is selected (step 822), and in step 824, the source analysis surface structure graph (tree) and the source analysis dependency structure are traversed to produce separate lists of the pairs of heads and daughters found within the structure. The result is a list of surface head/daughter pairs and a list of dependent head/daughter pairs. The two lists will be different in general since, as noted above, the surface and dependent daughters are not identical for many translation units.

This process is repeated for each analysis until the last is finished (step 826).

Having compiled surface and dependent head/daughter pair sets for each incorrect analysis, in step 828, a subset of head/daughter pairs is selected, so as to be the smallest set which, if disabled, would remove the largest number (preferably all) of incorrect analyses.

It will be recalled that when the original graphs were separated into translation components, the identities of the components occupying the daughter positions were stored for each. So as to avoid eliminating any of the head/daughter pairs which actually existed in the annotated source-target examples, these original combinations are removed from the pair lists.

The process of finding the smallest subset of head/daughter pairs to be disabled which would eliminate the maximum number (i.e. all) of the incorrect analyses is performed by an optimisation program, iteratively determining the effects of those of the head/daughter pairs which were not in the original examples.

It could, for example, be performed by selecting the head/daughter pair which occurs in the largest number of incorrect translations and eliminated that; then, of the remaining translations, conducting the head/daughter pair which occurred in the largest number and eliminating that; and so on, or, in some cases a "brute force" optimisation approach could be used.

The product of this step is therefore a pair of lists (one for the surface representation and one for the dependency representation) of pairs of head words and daughter words which cannot be combined. Generally, there is a pair of lists for each of the source and target sides.

Thus, these pairs could, at this stage, be stored for subsequent use in translation so that during the analysis phase of translation, the respective combinations are not attempted, thus reducing the time taken to analyse by reducing the number of possible alternative analyses, and eliminating incorrect analyses.

Having found and marked the pairs as illegal in step 830, however, it is then preferred to generalise these restrictions on head/daughter pairing to be able to select between competing analyses for, as yet, unseen source texts beyond those stored in the example files 224.

To do this, a principle is required which is capable of selecting the "best" generalisation from amongst all those which are possible. According to this embodiment, the preferred generalisation is that which is simplest (in some sense) and which remains consistent with the example data.

This is achieved as follows: A data structure is associated with each translation unit and each aligned daughter; in this embodiment, it is an attribute-value matrix (as is often used to characterise linguistic terms) although other structures could be used.

An aligned daughter may only dominate a translation unit if the associated data structures "match" in some sense (tested for example by PROLOG unifications).

The restrictions are generalised by choosing to minimise the numbers of distinct attribute-value matrices required to produce translations which are consistent with the original translation examples. A daughter can only select a particular head during translation if the head and daughter attribute-value matrices can be unified.

Initially, from the list of illegal head/daughter pairings produced by the process describe above, it is known from the example data that some heads cannot combine with some daughters. However, because the example data is incomplete, it is likely that for each such head, there are also other daughters with which it cannot combine which happen not to have been represented in the example texts (similarly, for each daughter there are likely to be other heads with which that daughter cannot combine).

In the following process, therefore, the principle followed is that where a first head cannot combine with a first set of daughters, and a second head cannot combine with a second set of daughters, and there is a high degree of overlap between the two lists of daughters, then the two heads are likely to behave alike linguistically, and accordingly, it is appropriate to prevent each from combining with all of the daughters with which the other cannot combine.

Exactly the same is true for the sets of heads for which each daughter cannot combine. The effect is thus to coerce similar heads into behaving identically and similar daughters into behaving identically, thus reducing the number of different behaviours, and generalising behaviours from a limited set of translation examples.

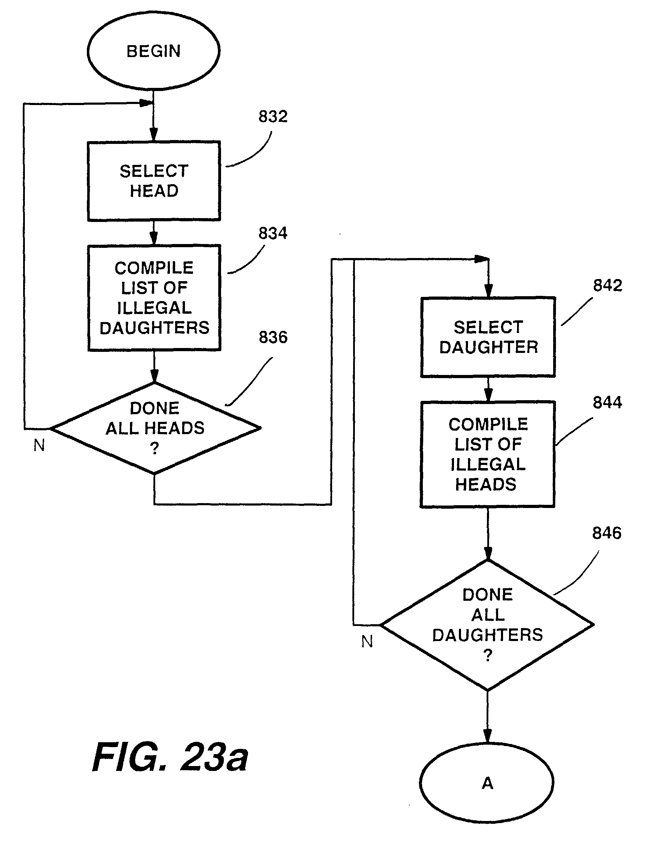

Referring to Figure 23a, in step 832, a first head within the set of illegal head/daughter pairs is located (the process is performed for each of the surface and dependency sets, but only one process will here be described for clarity). The daughters which occur with all other instances of that head in the set are collected into a set of illegal daughters for that head (step 834).

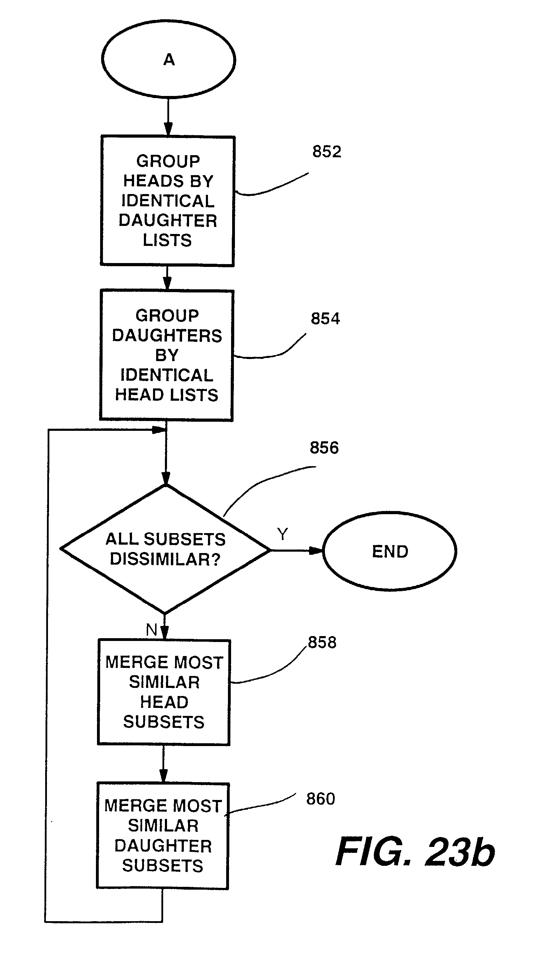

When (step 836) the operation has been repeated for each distinct head in the set, then in step 842, a first daughter is selected from the set of illegal pairs, and (similarly) each different head occurring with all instances of that daughter in the set of pairs are compiled into a set of illegal heads for that daughter (step 844). When all daughter and head sets have been compiled (both for the surface and for the dependency lists of pairs) (step 846) the process passes to step 852 of Figure 23b.

In step 852, the set of heads (each with a set of daughters with which it cannot combine) is partitioned into a number of subsets. All heads with identical daughter sets are grouped and stored together to form a subset. The result is a number of subsets corresponding to the number of different behaviours of heads.

In step 854, the same process is repeated for the set of daughters, so as to partition the daughters into groups having identical sets of heads.

Next, in step 856, it is determined whether all the head and daughter subsets are sufficiently dissimilar to each other yet. For example, they may be deemed dissimilar if no subset has any daughter in common with another. Where this is the case (step 856), the process finishes.

Otherwise, the two subsets of heads with the most similar daughter sets (i.e. the largest number of daughters in common - the largest intersection) are found (step 857). Similarly, in step 858, the two most similar subsets of daughters (measured by the number of heads they have in common) are found.

In step 859 it is tested whether the merger of the two head sets, and the two daughter sets, would be allowable. It is allowable unless the merger would have the effect of making illegal a combination of head and daughter that occurred in the example texts (and hence disabling a valid translation). If unallowable, the next most similar sets are located (step 857, 858).

If the merger is allowable, then (step 860) the two head sets are merged, and the daughter sets of all heads of the merged subset becomes the union of the daughter sets of the two previous subsets (that is, each head inherits all daughters from both subsets). Similarly, the two daughter sets are merged, and the head sets for each daughter become the union of the two previous head sets.

The process then returns to step 856, until the resulting subsets are orthogonal (that is, share no common members within their lists). At this point, the process finishes, and the resulting subsets are combined to generate a final set of head/daughter pairs which cannot be combined in translation.

This is then stored within the rules database 232, and applied during subsequent translations to restrict the heads selected to unite with each daughter during analysis. As mentioned above, separate sets are maintained for the surface representation and for the dependency representation.

Thus, this embodiment, like the last, simplifies and generalises the behaviours exhibited by translation components. Whereas, however, the preceding generalisation embodiment operated to expand the range of possible translation units, the present embodiment operates to restrict the range of legal translations which can be produced by generalising restrictions on word combinations.

## Automatic generation of new translation units from new sample translations

In this embodiment, the invention is arranged to provide new translation units automatically.

When a translator provides a new translation, the original text in the source language and the translated text in the target language form a source-target pair from which new translation units can be generated. This pair is input into the translation system for processing by the translation development program.

In this embodiment, as in those described above, a human user (who may or may not be the translator) can mark up the source language text and the target language text to indicate dependencies, and can then mark up alignments between the source language text and the target language text (i.e. pairs of words which are translations of each other).

In this embodiment, these steps are automated so as to allow new translation units to be generated either with or without human involvement.

In step 2502, the translation development program performs a translation on the input example source language text, sentence by sentence, to generate one or more target texts, and compares them with the input example target language text. If one of the translations matches the example target text, there is no need to proceed further, since the existing stored translation units can translate the text.

However, in some cases, the translation system will be able to produce an analysis of (and hence would be able to generate translations from) the source text, but not the target text. The same is, of course, true in reverse; in this embodiment, it is entirely arbitrary which of the two example texts is designated the "source" and which the "target".

It would be possible simply to add the entire pair of sentences as a single new translation unit, but this method would require substantial storage and processing resources, since it would be necessary to store every possible sentence in either language to ensure generally successful translation.

Accordingly, this embodiment aims to find a single new translation unit comprising a part of the example text which, if added to the existing stored translation units, would allow the source text to be translated by the system to yield the target text (and vice versa).

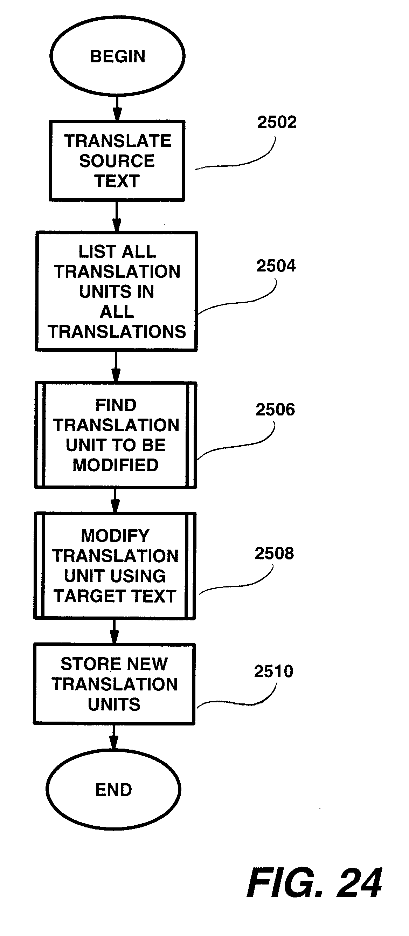

Referring once more to Figure 24, having generated one or more target language translations from the new example source text, the translation development program generates and stores a temporary list of all instances (e.g. occurrences) of all stored translation units featuring in each of the generated translations.

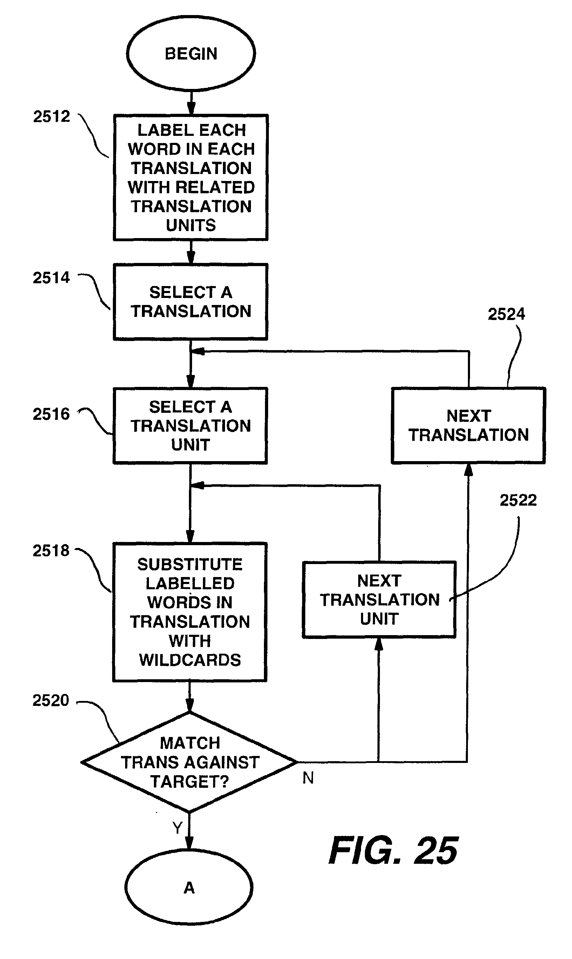

In step 2506 (described in greater detail below with reference to Figure 25), the translation development program locates one such translation unit which, if altered, would make one of the generated target language texts the same as the input example target language text.

In step 2508, the translation unit thus located is modified using the example target language text and, in step 2510, the new translation unit formed from the existing translation unit thus modified is stored in the database for use in future translations.

Referring to Figure 25, the process of locating the translation unit to modified is as follows.

In step 2512, the translation development program stores, for each word in each translation, a list of labels indicating the stored translation unit instance(s) which dominate that word (i.e. those within which that word is listed as the head word, or a daughter). Thus, at this point, the system stores the original example source text, multiple generated target texts, a set of analyses (i.e. data structures representing dependency graphs) which map the source text onto the various target texts, and labels for each of the target text words.

In step 2514, a first of the generated translation texts is selected, and in step 2516, a first of the translation units is selected which, according to the labels for each of the words of the selected translation, dominates one or more of those words.

In step 2518, a test translation is created, by taking the translation currently selected, and then replacing each word in that translation which was dominated by the currently selected translation unit with a wildcard character. The test translation now consists of the generated translation with one or more wild card characters.

In step 2520, the translation development program compares the test translation with the example target text, seeking to match every word present in the test translation with a word in the target text, and each of the wildcard characters in the text translation with one or more contiguous words in the example target text, so as to leave no unmatched words in the test translation or the example target text. If there is no match, then in step 2522 the next translation unit is selected and a new test translation is generated in the same way. When there are no further translation units within the selected translation, the next generated translation is selected in step 2524 until all have been processed. If no match was found, then no new translation units are stored.

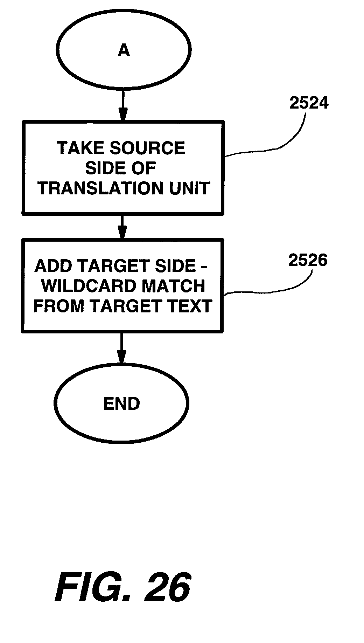

When a match is found (step 2520), then the translation unit which gave rise to the match is selected to be modified as will be described in relation to Figure 26.

In step 2524, the source language part of the translation unit (that is, the head word in the source language and the list of surface and dependent daughters in the source language) is retained. Those parts of the translation unit in the target language which match words in the example target text are retained, and the or each word which did not match is replaced by the unmatched word (or contiguous words) from the example target language text. Thus, the new translation unit consists of the original source language side, and the new target language side made up from the example target language text.

This embodiment will now be illustrated for a simple example (translating between English and French).

Suppose the stored translation units are:

tu([the], woman, [],[la],femme,[])
to([the], car, [],[la],voiture,[])

tu([X], sees, [B],[X],voit,[B])

where each translation unit ("tu") has the form (in a Dependency formalism - see Mel'cuk I A 1988, *Dependency Syntax: theory and practice*, State University of New York Albany):

tu(
*LeftSourceDaughters, SourceHead, RightSourceDaughters, LeftTa*
*rgetDaughters, TargetHead, RightTargetDaughters*
),

and variables are represented by upper case letters and literals by lower case words. Such a database of translation units would admit the following translations (that is, would generate one from the other):

the woman sees the car < = > la femme voit la voiture

and

the car sees the woman < = > la voiture voit la femme

The task is to add a new translation unit so that the database can handle:

the woman sees the car < = > la femme voit l'automobile

In other words, a new pair of translation text examples (the woman sees the car < = > la femme voit l'automobile) is to be used to update the database of translation units.

The system is able to achieve an analysis of the source text using the current database, but the only translation target text produced is,

la femme voit la voiture

Which does not correspond to the example target text.

The system gives each instance of the translation units used to produce this translation a unique identifier (for simplicity in this example the target headword is used as the identifier as this happens to be unique in this example). Each target word in this translation is then labelled with the identifier of each translation unit instance that dominates this word,

la$^{[femme,voit]}$ femme$^{[femme,voit]}$ voit$^{[voit]}$ la$^{[voiture,voit]}$ voiture$^{[voiture,voit]}$

Here there are three different identifiers; *femme,voit* and *voiture* corresponding to the three translation unit instances. The system forms three patterns by replacing the words labelled with these identifiers with wildcards as follows.

label = femme:
    * voit la voiture

label = voit:
    *

label = voiture:
    la femme voit *

where * represents the wildcard. Note that two or more adjacent wildcards can be merged into a single wildcard.

The system attempts to match each of these against the actual target text that we require and finds that only the pattern corresponding to the translation unit instance labelled with 'voiture' matches the target text in the translation pair. This indicates that a new translation unit should be created from the existing unit labelled with 'voiture'. The new translation unit will be

tu([the],car,[],[l'],automobile,[])

which has the same source side as the original translation unit labelled with 'voiture' but a new target side to generate the appropriate words.

Although this example deals with simple planar trees, the same algorithm can be applied when non-planar trees are considered. All that is required is that there is a clear definition of when one word dominates another so that the translation unit that needs to be modified can clearly be identified.

The process of Figure 25 might select several translation units to form the basis of new units. It is possible to add all such units, or only the first located. Alternatively, one of the possible translation units could be selected to form the basis of a new translation unit. In this case, it is desirable to identify the most general translation unit.

In such embodiments, the translation unit, of several possible choices, which would be selected which is associated with the smallest number of words to be replaced in the target text. Further, of several translation units, those which involve the smallest amount of replacement of non-literal daughters in the target language with literal daughters will be selected.

Various other modifications to the above described embodiment will be apparent. For example, the lexicon databases could be employed to identify target language words which are translations of source language words. Rather than the wildcard matching step described above, each of the translation units listed could be modified by substituting an alternative translation from the lexicon (e.g. "automobile" for "voiture" in the above example) and then regenerating the target test using the modified translation unit. On finding a match between the regenerated target text and the example target text, the modified translation unit giving rise to the match would be stored as a new translation unit for use in future translation.

## Conclusion

The present invention in its various embodiments provides a translation system which does not require manually written linguistic rules, but instead is capable of learning translation rules from a set of examples which are marked up using a user interface by a human. The marked up examples are then preprocessed to generalise the translation, and to restrict the number of ungrammatical translation alternatives which could otherwise be produced.

The restriction and generalisation examples both rely on the principle of using the simplest models which are consistent with the example data.

The form employed results in translation units which resemble normal grammar or logic rules to the point where a simple parser, combined with the unification features of the PROLOG language or similar languages, can perform translation directly.

Embodiments of the invention may be used separately, but are preferably used together.

Whilst apparatus which comprises both a development program 220 and a translation program 230 has been described, it will be clear that the two could be provided as separate apparatus, the development apparatus developing translation data which can subsequently be used in multiple different translation apparatus. Whilst apparatus has been described, it will be apparent that the program is readily implemented by providing a disc containing a program to perform the development process, and/or a disc containing a program to perform the translation process. The latter may be supplied separately from the translation data, and the latter may be supplied as a data structure on a record carrier such as a disc. Alternatively, programs and data may be supplied electronically, for example by downloading from a web server via the Internet.

Conveniently the present invention is provided for use together with a translation memory of translation jobs performed by a translator, so as to be capable of using the files in the memory for developing translation data.

It may be desirable to provide a linguistic pre- and post-processor program arranged to detect proper names, numbers and dates in the source text, and transfer them correctly to the target text.

Whilst the present invention has been described in application to machine translation, other uses in natural language processing are not excluded; for example in checking the grammaticality of source text, or in providing natural language input to a computer. Whilst text input and output have been described, it would be straightforward to provide the translation apparatus with speech-to-text and/or text-to-speech interfaces to allow speech input and/or output of text.

Whilst particular embodiment have been described, it will be clear that many other variations and modifications may be made. The present invention extends to any and all such variations, and modifications and substitutions which would be apparent to the skilled reader, whether or not covered by the append claims. For the avoidance of doubt, protection is sought for any and all novel subject matter and combinations thereof.

## Claims

1. A computer natural language translation system, comprising:

   means for inputting source language text;
   means for outputting target language text;
   transfer means for generating said target language text from said source language text using stored translation data generated from examples of source and corresponding target language texts, the transfer means being arranged to use data defining a plurality of stored translation units each consisting of a small number of ordered words and/or variables in both the source and the target language, and

translation development means for inputting new examples of source and corresponding target language texts, and adding new translation units based thereon, the development means being arranged:

> to apply said stored translation data to a new example source language text, so as to generate one or more translations of source text from said stored translation units;
>
> for each said generated translation, to test each translation unit to find a translation unit which, with modification of the target language portion thereof, would cause that generated translation to match the input example target language text;
>
> to modify the target language portion of said translation unit to generate a new translation unit; and
>
> to store the new translation unit.

2. A system according to claim 1, in which said step of testing comprises:

> locating words in the translation which are affected by the translation unit; and
>
> testing whether, ignoring those words, the translation matches the input example target language text.

3. A system according to claim 1 or claim 2, in which said step of modifying comprises taking words from the input example target language text.

4. A method of deriving new translation units for use in a computer natural language translation system, the method comprising:

> inputting a new example source language text and a corresponding new example target language text;
>
> generating one or more translations of the source language text using stored translation units;
>
> locating one of the stored translation units used to generate the translations which, if modified, could cause a said translation to match the example target language text; and
>
> modifying the located translation unit to generate a new translation unit for future use in translation.

5. Apparatus for inferring a new translation unit which allows a given source text of a translation pair to be translated as a the corresponding given target text of the pair, comprising,

> a database of translation units;
>
> means arranged to analyse the source text into one or more alternative analyses;
>
> means arranged to generate possible target texts from the said analyses
>
> means arranged to produce patterns from the generated target texts by substituting wildcards for those target text words which are dominated by a given translation unit;
>
> means arranged to compare the pattern against the target text of the translation pair to see if a match can be achieved; and
>
> means arranged to modify the given translation unit so that the translation produced by this analysis would become identical to the target text in the translation pair.

6. A computer natural language translation system, comprising:

> means for inputting source language text;
> means for outputting target language text;
> transfer means for generating said target language text from said source language text using stored translation data generated from examples of source and corresponding target language texts,
>
> **characterised in that** said stored translation data comprises a plurality of translation components, each comprising:
>
> surface data representative of the order of occurrence of language units in said component;
> dependency data related to the semantic relationship between language units in said component; and
> the dependency data of language components of said source language being aligned with corresponding dependency data of language components of said target language,
>
> and **in that** said transfer means is arranged to use said surface data of said source language in analysing the source language text, and said surface data of said target language in generating said target language text, and said dependency data in transforming the analysis of said source text into an analysis for said target language.

7. A computer language translation development system, for developing data for use in translation, comprising:

means for allowing corresponding source and target example texts to be linked into source and target language dependency graphs;
means for allowing corresponding translatable nodes of said source and target language dependency graphs representing translatable parts of the source and target texts to be aligned; and
means for automatically generating, from said source and target language dependency graphs, respective associated surface representative graph having a tree structure.

8. A computer program comprising code to execute on a computer to cause said computer to act as the system of any preceding claim.

100

KEYB'D     COMPUTER     VDU

102              104              106

# FIG. 1

108

CPU

STORE      CHIPSET      MEMORY

110            112            114

# FIG. 2

**FIG. 3**

**FIG. 6**

SOURCE LANG TEXT    (A)

SOURCE SURFACE TREE    (B)

SOURCE DEPENDENCY STRUCTURE    (C)

TARGET DEPENDENCY STRUCTURE    (D)

TARGET SURFACE TREE    (E)

GENERATED TARGET LANG TEXT    (F)

# FIG. 4

**FIG. 5**

FIG. 7

**FIG. 8**

**FIG. 10**

**FIG. 9**

**FIG. 11**

**FIG. 13**

**FIG. 12**

**FIG. 14**

**FIG. 16**

**FIG. 15**

BEGIN

SELECT
SOURCE
SENTENCE — 602

FIND SOURCE
SURFACE
TREE WHICH
REPRODUCES WORD
ORDER — 610

MAP TREE ONTO
SOURCE
DEPENDENCY
GRAPH — 620

MAP GRAPH ONTO
TARGET DEPENDENCY
GRAPH — 692

MAP GRAPH ONTO
TARGET SURFACE
TREE — 694

STORE
TARGET
TEXT — 696

LAST
SENTENCE
? — 698

N

Y

END

*FIG. 17*

FIG. 18a

FIG. 18b

**FIG. 19a**

**FIG. 19b**

**FIG. 19c**

**FIG. 19d**

**FIG. 19e**

**FIG. 19f**

**FIG. 20**

*FIG. 21*

BEGIN

TRANSLATE SOURCE EXAMPLE TEXTS — 802

SELECT TRANSLATION — 804

COMPARE TRANSLATION WITH TARGET LANGUAGE TEXTS — 806

808

812

N  MATCH?  Y

MARK AS INCORRECT

810  MARK AS CORRECT

DONE?  Y  END

814

N

BEGIN

SELECT
INCORRECT
ANALYSIS — 822

GENERATE
LISTS OF SURFACE
AND DEPENDENT
HEAD/DAUGHTER
PAIRS — 824

LAST? — 826

N

Y

SELECT
MINIMUM
SUBSET OF
PAIRS — 828

STORE LISTS
OF ILLEGAL
PAIRS — 830

END

**FIG. 22**

FIG. 23a

A

GROUP
HEADS BY
IDENTICAL
DAUGHTER
LISTS — 852

GROUP
DAUGHTERS
BY
IDENTICAL
HEAD LISTS — 854

856

ALL SUBSETS
DISSIMILAR? — Y → END

N

MERGE MOST
SIMILAR
HEAD
SUBSETS — 858

MERGE MOST
SIMILAR
DAUGHTER
SUBSETS — 860

*FIG. 23b*

BEGIN

TRANSLATE
SOURCE
TEXT — 2502

LIST ALL
TRANSLATION
UNITS IN
ALL
TRANSLATIONS — 2504

FIND
TRANSLATION
UNIT TO BE
MODIFIED — 2506

MODIFY
TRANSLATION
UNIT USING
TARGET TEXT — 2508

STORE NEW
TRANSLATION
UNITS — 2510

END

*FIG. 24*

FIG. 25

A

**2524**

TAKE SOURCE
SIDE OF
TRANSLATION UNIT

**2526**

ADD TARGET SIDE -
WILDCARD MATCH
FROM TARGET TEXT

END

# FIG. 26

EP 1 349 079 A1

| | European Patent Office | EUROPEAN SEARCH REPORT | Application Number EP 02 25 2326 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 99 62002 A (BECKS ET AL.) 2 December 1999 (1999-12-02) * page 1, line 28 - page 2, line 38 * * page 5, line 17 - page 6, line 8 * * page 8, line 26 - line 32 * ----- | 1-5,8 | G06F17/28 |
| | | | TECHNICAL FIELDS SEARCHED (Int.Cl.7) G06F |

~~The present search report has been drawn up for all claims~~

| Place of search | Date of completion of the search | Examiner |
|---|---|---|
| BERLIN | 22 January 2003 | Abram, R |

**LACK OF UNITY OF INVENTION
SHEET B**

The Search Division considers that the present European patent application does not comply with the requirements of unity of invention and relates to several inventions or groups of inventions, namely:

1. Claims: 1-5,8

   Development of translation units for example-based translation

2. Claims: 6,8

   Translation using surface data & dependency data

3. Claims: 7,8

   Translation development by example using source & traget language dependency graphs

ANNEX TO THE EUROPEAN SEARCH REPORT
ON EUROPEAN PATENT APPLICATION NO.                          EP 02 25 2326

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2003

| Patent document cited in search report | Publication date | Patent family member(s) | Publication date |
|---|---|---|---|
| WO 9962002 A | 02-12-1999 | EP 1080424 A | 07-03-2001 |
| | | JP 2002517040 T | 11-06-2002 |
| | | NO 20005930 A | 29-01-2001 |

EPO FORM P0459

For more details about this annex : see Official Journal of the European Patent Office, No. 12/82